# FASCICULE DE BREVET EUROPEEN

(11) **EP 1 794 685 B1**
(45) Date de publication et mention de la délivrance du brevet: **16.03.2016**
(21) Numéro de dépôt: 05807805.6
(22) Date de dépôt: 28.09.2005
(51) Int. Cl.: G06F 17/00

(54) **DISPOSITIF ET PROCEDE D'ANALYSE ET DE DIAGNOSTIC D'UN SYSTEME**
VORRICHTUNG UND VERFAHREN FÜR EINE SYSTEMANALYSE UND -DIAGNOSE
DEVICE AND METHOD FOR A SYSTEM ANALYSIS AND DIAGNOSIS

(30) Priorité: 28.09.2004 FR 0410271
(43) Date de publication de la demande: 13.06.2007
(73) Titulaire: Prosyst, 92500 Rueil Malmaison (FR)
(72) Inventeur: WILLAEYS, Didier, F-59159 Noyelles sur Escaut (FR); ASSE, Abdallah, F-59139 Wattignies (FR)
(74) Mandataire: Delumeau, François Guy
(86) Numéro de dépôt international: PCT/FR2005/002400
(87) Numéro de publication internationale: WO 2006/035163

(56) Documents cités:
- US-A- 4 616 308
- US-A- 5 079 731
- US-A- 5 752 008
- US-A- 5 818 736
- US-B1- 6 336 085

## Description

La présente invention a pour objet un dispositif et un procédé d'analyse et de diagnostic d'un système, notamment, mais pas uniquement, dans le domaine des installations industrielles. En particulier, mais pas uniquement, l'invention trouve son application pour des installations industrielles pilotées par des automates de commande à logique programmée ou câblée.

Dans la plupart des installations industrielles, on retrouve des systèmes automatisés de pilotage et de contrôle, en particulier des automates de commande à logique programmée ou câblée. En général, les systèmes de pilotage de ces installations industrielles comprennent un module d'entrée pour le contrôle de l'état des variables associées aux capteurs du système de l'installation industrielle pilotée, et un module de sortie pour la commande des actionneurs de ce système. Ces modules d'entrée-sortie sont connectés à un bus périphérique relié à une unité centrale délivrant des ordres pour piloter ledit système.

Ces systèmes comprennent donc généralement un programme que l'on appellera programme d'animation, et une mécanique de fonctionnement ou d'actionnement.

L'analyse du fonctionnement de ces systèmes est un point très important, notamment lors de la mise en service pour réduire les coûts d'intégration, ou encore en cas de panne, pour effectuer un diagnostic rapide et efficace. Dans ce contexte, on ne peut se contenter de simples analyses empiriques et, ou, de confrontations d'expériences, pour détecter toute dérive ou divergence qui peuvent perturber gravement la production.

C'est pourquoi les systèmes de l'état de la technique comprennent généralement, à côté de leur mécanique d'actionnement et de leur programme d'animation, un outil de diagnostic. Classiquement, cet outil se présente sous la forme d'un programme qui est adapté à chaque machine, intégré au programme d'animation, et qui représente en général de l'ordre de 70 % de l'ensemble du programme. Un tel outil est donc en général coûteux, complexe, et non réutilisable car dédié à une machine donnée.

De l'état de la technique antérieure, on connait également le document US 5818736 qui décrit un système et un procédé de simulation permettant de tester l'architecture en blocs logiques d'un système de contrôle de processus en temps réel.

Des solutions existent qui sont basées sur l'utilisation de modules standards de diagnostic, réutilisables d'un programme à l'autre, mais généralement dédiés à une gamme de systèmes donnée. Par ailleurs, ces solutions intègrent la mise en équation des conditions anormales de fonctionnement ou conditions hors normes, ce qui les rend inutilisables dans de nombreux cas. En effet, ces solutions sont trop lourdes et la liste des conditions hors normes prises en compte n'est jamais exhaustive (il est plus aisé de déterminer les conditions de fonctionnement normal).

En outre, la localisation d'une panne dans certains systèmes est une opération complexe et longue qui va nécessiter une intervention pour accéder aux zones suspectes. Il est donc impératif de localiser rapidement et précisément l'endroit du système nécessitant une intervention. Il existe donc un besoin d'une solution fiable qui permette de pallier les inconvénients précités. C'est l'objet de l'invention que de pallier ces inconvénients, en proposant un procédé et un dispositif d'analyse d'un système qui permette notamment d'émettre rapidement un diagnostic sur le fonctionnement du système, sans alourdir le ou les programmes d'animation dudit système, et qui soit réutilisable d'un système à l'autre.

A cette fin, l'invention se base sur l'utilisation d'un modèle du système réel, véritable système virtuel, construit par identification de groupes ou unités qui sont définis par des variables ou grandeurs caractéristiques et qui comprennent les variables qui influent directement ou indirectement sur ces variables caractéristiques. La construction d'un tel modèle n'est pas l'objet de la présente invention. A titre d'exemple, on citera le brevet FR 2 686 714, qui décrit un procédé de simulation d'un processus industriel, basé sur la notion d'axe cinématique et de secteur ou plage de valeurs.

L'invention se rapporte donc, selon un premier aspect, à un procédé d'analyse en vue d'émettre un diagnostic sur le fonctionnement d'un système réel, ledit procédé étant basé sur l'utilisation d'un modèle dudit système réel. Le modèle comprend au moins deux variables associées à des capteurs du système réel et qui sont réparties dans un ou plusieurs groupes et stockées dans des premiers moyens de stockage de données. Chacun des groupes est défini par et comprenant une ou plusieurs variables appelées variables caractéristiques, et regroupe, en plus de ces variables caractéristiques, toutes les autres variables ayant une influence directe ou indirecte sur la valeur d'au moins une des variables caractéristiques du groupe. Ces dernières variables sont appelées variables influentes. L'état du système virtuel à un instant donné, prédit par le modèle est ainsi défini par les valeurs respectives de ces variables, influentes, ou caractéristiques. Le procédé de l'invention, basé sur un tel modèle, est ainsi caractérisé en ce qu'il comprend une première étape d'initialisation du modèle dans un état correspondant à un état donné du système réel par l'intermédiaire de premiers moyens de traitement qui communiquent avec le système réel par le biais d'une interface de communication, et une seconde étape de création d'une liste dite liste de variables discordantes, qui comprend les variables caractéristiques dont la valeur prédite par le modèle est non vérifiée dans le système réel, et de stockage de cette dite liste de variables discordantes, de variables caractéristiques dont la valeur prédite par le modèle est non vérifiée dans ledit système réel, et de stockage de cette dite liste de variables discordantes dans des deuxièmes moyens de stockage de données, par l'intermédiaire de moyens de comparaison qui communiquent avec le système réel par le biais de l'interface de communication, cette dite étape de création de la liste de variables discordantes comprenant :
i. une étape de prédiction par le modèle de l'état du système réel à partir d'une commande donnée,
ii. une étape de comparaison de l'état prédit avec l'état réel du système après mise en oeuvre de ladite commande donnée. Par prédiction, on entend aussi bien une prédiction de changement d'état qu'une prédiction d'absence de changement. Le procédé de l'invention comprend en outre, pour chaque variable caractéristique de la liste de variables discordantes, une troisième étape de traitement comprenant la création d'une liste, dite liste initiale de variables suspectes, de variables influentes pouvant avoir généré la valeur discordante de ladite variable discordante, et de stockage de cette dite liste initiale de variables suspectes dans des troisièmes moyens de stockage de données, par l'intermédiaire de moyens de sélection, et une étape de création d'une liste, dite restreinte de variables suspectes, par filtrage de la liste initiale de variables suspectes, et de stockage de cette dite liste restreinte de variables suspected dans des quatrièmes moyens de stockage de données, par l'intermédiaire de moyens de filtrage.

Lorsque la comparaison indique une différence entre les deux états, c'est-à-dire entre la valeur d'une ou plusieurs variables caractéristiques dans le modèle et la valeur de ces variables caractéristiques dans le système réel, ces dernières sont insérées dans la liste de variables discordantes. Sinon, c'est-à-dire lorsque la comparaison n'indique aucune différence entre les deux états, les variables du modèle sont mises à jour pour valider son état et poursuivre le processus.

Dans une variante de réalisation, un modèle simplifié est construit à partir du modèle initial en ne tenant compte, dans chaque groupe, que des variables influentes primaires et des variables caractéristiques, une variable influente primaire étant une variable influente sur laquelle aucune autre variable du même groupe n'influe. Ce modèle est utilisé à la place du modèle initial dans l'étape de création de la liste de variables discordantes.

Eventuellement, cette liste de variables discordantes est triée, en utilisant un graphe de dépendance auquel est associée une relation d'ordre partiel ordonnant les groupes. La variables discordante appartenant au groupe de rang le plus élevé est placée en première position, et ainsi de suite.

Dans une variante de réalisation, l'étape de création de la liste initiale de variables suspectes consiste à sélectionner toutes les variables influentes faisant partie du groupe auquel appartient la variable discordante en cours de traitement.

Dans une autre variante de réalisation, cette étape de création d'une liste initiale de variables suspectes comprend un pré-diagnostic pour présélectionner un sous-ensemble de variables suspectes parmi les variables influentes faisant partie du groupe auquel appartient la variable discordante en cours de traitement.

Dans une variante de réalisation, l'étape de création de la liste restreinte de variables suspectes consiste en l'élimination des variables suspectes de la liste initiale qui, soit ne génèrent pas de valeur discordante dans le modèle pour chacune des variables de la liste de variables discordantes, soit génèrent une valeur discordante dans le modèle pour au moins une variable caractéristique n'appartenant pas à la liste de variables discordantes.

De préférence, l'étape de création de la liste restreinte de variables suspectes comprend deux filtrages successifs. Le premier filtrage élimine les variables suspectes ne générant pas la valeur discordante pour la variable discordante en cours de traitement. Le deuxième filtrage élimine les variables suspectes qui, soit génèrent une valeur discordante pour au moins une autre variable caractéristique que la variable discordante en cours de traitement, cette autre variable caractéristique n'appartenant pas à la liste de variables discordantes, soit ne génèrent pas de valeur discordante pour au moins une autre variable caractéristique que la variable discordante en cours de traitement, cette autre variable caractéristique appartenant à la liste de discordances.

Dans une variante de mise en oeuvre, le procédé est utilisé pour l'analyse d'un système industriel piloté par des automates de commande.

L'invention se rapporte selon un deuxième aspect à un dispositif d'analyse en vue d'émettre un diagnostic sur le fonctionnement d'un système réel, basé sur l'utilisation d'un modèle dudit système réel. Ce modèle comprend au moins deux variables associées à des capteurs du système réel et qui sont réparties dans un ou plusieurs groupes. Chacun des groupes est défini par et comprenant une ou plusieurs variables appelées variables caractéristiques, et regroupe, en plus de ces variables caractéristiques, toutes les autres variables ayant une influence directe ou indirecte sur la valeur d'au moins une des variables caractéristiques du groupe. Ces dernières variables sont appelées variables influentes. L'état du système virtuel à un instant donné, prédit par le modèle est ainsi défini par les valeurs respectives de ces variables, influentes, ou caractéristiques. Le dispositif met en oeuvre le procédé tel que défini ci-avant. Le dispositif de l'invention, basé sur un tel modèle, est ainsi caractérisé en ce qu'il comprend une interface de communication apte à permettre la communication entre le dispositif d'analyse et le système réel, des moyens de stockage des données définissant le modèle, des moyens de traitement pour mettre en oeuvre le modèle, ces dits moyens de traitement étant aptes à communiquer avec le système par le biais de ladite interface de communication, , des moyens de comparaison de l'état du système prédit par le modèle et l'état du système réel ces dits moyens de comparaison étant aptes à communiquer avec le système par le biais de ladite interface de communication, des moyens de stockage d'une liste de variables caractéristiques discordantes issue de la comparaison réalisée par les moyens de comparaison, des moyens de sélection, dans le modèle, des variables influentes suspectes initiales pouvant avoir généré la valeur discordante d'au moins une variable caractéristique discordante, des moyens de filtrage desdites variables influentes suspectes initiales pour obtenir les variables influentes suspectes restreintes, et des moyens de stockage desdites variables influentes suspectes initiales et desdites variables influentes suspectes restreintes.

D'autres caractéristiques et avantages de l'invention apparaîtront plus clairement et de manière complète à la lecture de la description ci-après des variantes préférées de mise en oeuvre du procédé et de réalisation du dispositif, lesquelles sont données à titre d'exemples non limitatifs et en référence aux dessins annexés suivants :
- figure 1 : représente schématiquement un exemple d'installation industrielle simplifiée dont l'élément principal est un verrin,
- figure 2 : représente schématiquement les relations électriques entre les éléments du système de la figure 1,
- figure 3a : représente schématiquement le modèle complet du système de la figure 1,
- figure 3b : représente schématiquement le modèle direct, ou modèle simplifié, du système de la figure 1,
- figure 4 : représente le graphe de dépendance des groupes du système de la figure 1,
- figures 5a, 5b, 5c, 5d : représentent schématiquement l'enchaînement des différentes étapes du procédé d'analyse de l'invention,
- figure 6 : représente schématiquement le dispositif d'analyse selon l'invention.

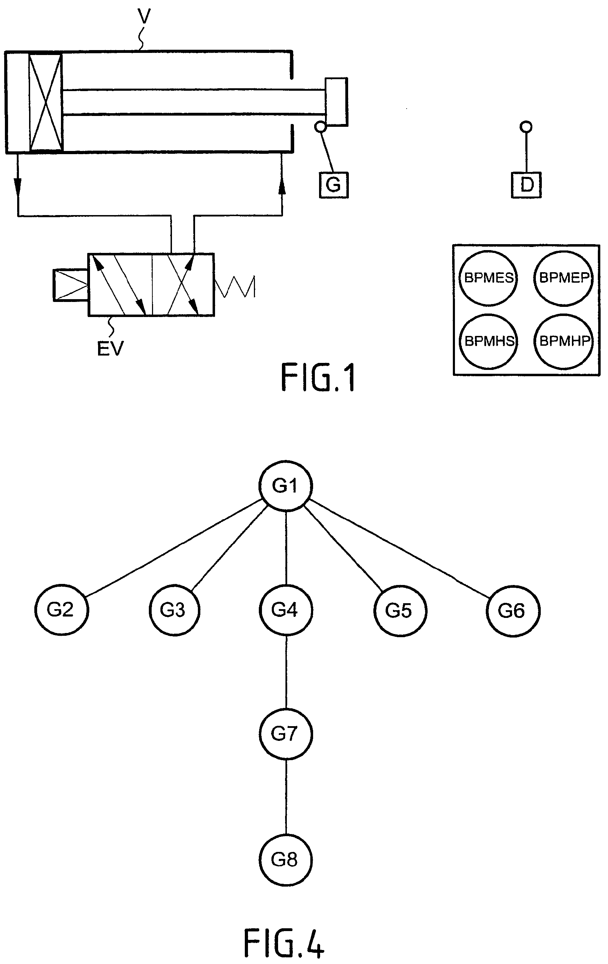

La figure 1 représente schématiquement un exemple d'installation industrielle simplifiée dont l'élément principal est un vérin V de type vérin à simple tige et simple effet avec évacuation à l'air libre. Ce vérin est commandé par un distributeur d'énergie de type électrovanne EV. Lorsque le vérin est en position rentrée, ou position gauche, le capteur G est actionné et le capteur D ne l'est pas. Lorsque le vérin est en position sortie, ou position droite, le capteur D est actionné et le capteur G ne l'est pas. Le système dispose en outre de quatre boutons poussoirs : bouton poussoir de mise en service BPMES, bouton poussoir de mise hors service BPMHS, bouton poussoir de mise en puissance BPMEP, bouton poussoir de mise hors puissance BPMHP.

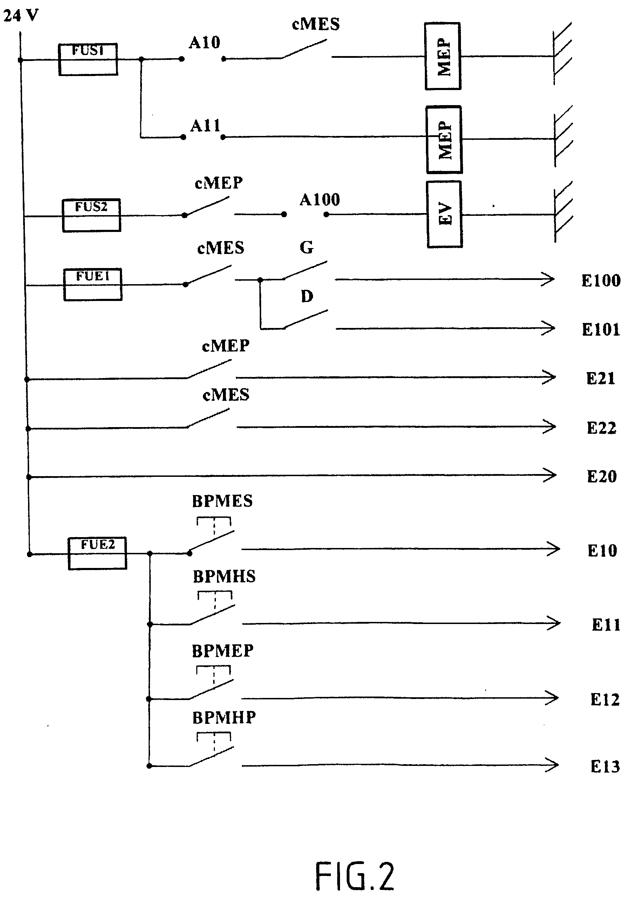

La figure 2 représente schématiquement les relations électriques entre les éléments du système de la figure 1. Ainsi, l'alimentation 24 volts alimente, via un fusible FUS1, deux commandes A10 et A11 provenant du système de commande. A10 et A11 sont donc des sorties du système de commande et des entrées du modèle. A10 commande la bobine du relais de mise en puissance MEP par l'intermédiaire d'un contact du relais de mise en service MES. A11 commande la bobine du le relais de mise en service MES.

La mise en puissance MEP, par l'intermédiaire d'un fusible FUS2, alimente la commande A100. A100 commande la bobine de l'électrovanne EV.

La mise en service MES alimente, par l'intermédiaire d'un fusible FUE1, le capteur G en position ouverte ou fermée qui est connecté à l'entrée E100, et le capteur D en position ouverte ou fermée qui est connecté à l'entrée E101.

L'alimentation 24 volts alimente également directement un contact de mise en puissance MEP, en position ouverte ou fermée connecté à l'entrée E21, et un contact de mise en service MES en position ouverte ou fermée E22. L'alimentation 24V est également directement connectée à l'entrée E20.

Enfin, l'alimentation 24V, par l'intermédiaire du fusible FUE2, alimente les connecteurs du bouton poussoir de mise en service BPMES, du bouton poussoir de mise hors service BPMHS, du bouton poussoir de mise en puissance BPMEP, et du bouton poussoir de mise hors puissance BPMHP, qui sont respectivement connectés aux entrées E10, E11, E12 et E13.

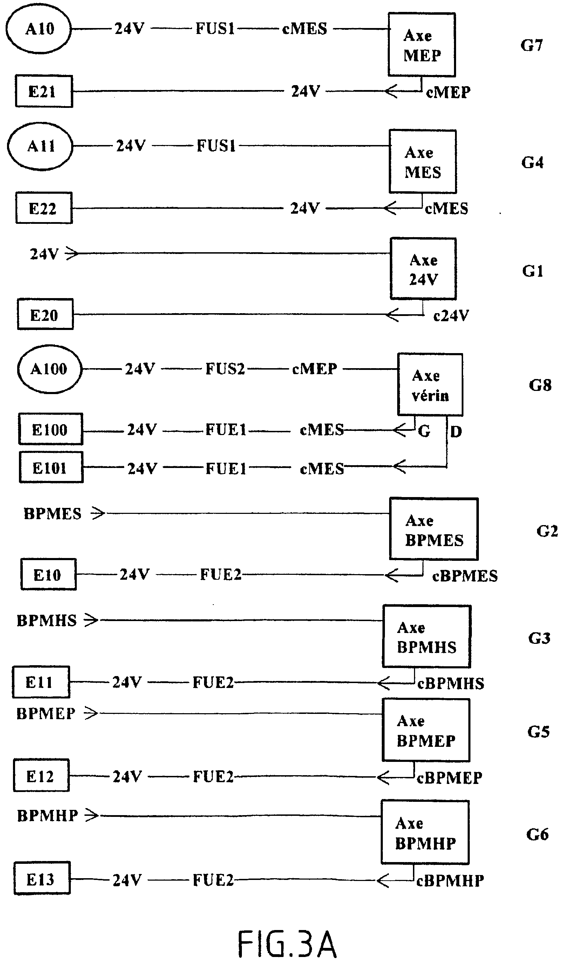

La figure 3a représente schématiquement l'ensemble des éléments du système de la figure 1 et leurs relations dans le modèle complet du système. Ce graphe met en évidence huit groupes (ou axes cinématiques). Le groupe G1 correspond au groupe de l'alimentation 24 Volts, le groupe G2 correspond au bouton poussoir de mise en service BPMES. Le groupe G3 correspond au bouton poussoir de mise hors service BPMHS. Le groupe G4 correspond à la mise en service MES. Le groupe G5 correspond au bouton poussoir de mise en puissance BPMEP. Le groupe G6 correspond au bouton poussoir de mise hors puissance BPMHP. Le groupe G7 correspond à la mise en puissance MEP. Enfin, le groupe G8 correspond au vérin lui-même avec l'électrovanne EV.

Cette modélisation permet d'identifier et de visualiser l'ensemble des variables du système. Parmi ces variables, on retrouve les variables caractéristiques E10, E11, E12, E13, E20, E21, E22, E100, E101 (variables d'entrée du système de commande), respectivement associées au bouton poussoir de mise en service BPMES, au bouton poussoir de mise hors service BPMHS, au bouton poussoir de mise en puissance BPMEP, au bouton poussoir de mise hors puissance BPMHP, à l'alimentation 24V, à la mise en puissance MEP, à la mise en service MES, au capteur gauche G, et au capteur droit D.

Toutes les autres variables sont donc des variables influentes. Certaines de ces variables sont dites variables influentes primaires dans un groupe donné, lorsque aucune autre variable n'influe sur elles. C'est le cas par exemple de A100, FUS2 et FUE1. D'autres sont dites variables d'actionnement (une par groupe) comme par exemple MEP et MES.

On retrouve donc les lignes d'influence suivantes :
- dans le groupe G1 : 24V, E20,
- dans le groupe G2 : BPMES, FUE2, 24V, E10,
- dans le groupe G3 : BPMHS, FUE2, 24V, E11,
- dans le groupe G4 : A11, 24V, FUS1, MES, E22,
- dans le groupe G5 : BPMEP; FUE2, 24V, E12,
- dans le groupe G6 : BPMHP, FUE2, 24V, E13,
- dans le groupe G7 : A10, 24V, FUS1, MES, MEP, E21,
- dans le groupe G8 :
   - A100, 24V, FUS2, MEP, vérin, G, MES, FUE1, E100,
   - A100, 24V, FUS2, MEP, vérin, D, MES, FUE1, E101

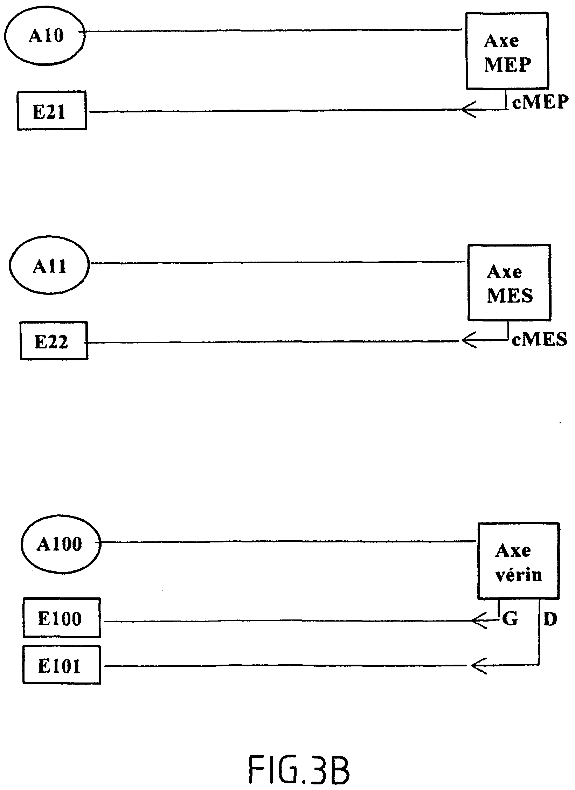

On appellera modèle simplifié le modèle dans lequel on ne prend pas en compte les variables influentes intermédiaires qui ne sont pas des variables d'actionnement. Il ne concerne donc que les groupes commandés par l'automate (donc avec des sorties automates). Ce modèle simplifié, représenté schématiquement à la figure 3b, est donc, dans notre exemple, constitué des lignes d'influence simplifiées suivantes :
- dans G1 : néant,
- dans G2 : néant,
- dans G3 : néant,
- dans G4 : A11, MES, E22
- dans G5 : néant,
- dans G6 : néant,
- dans G7 : A10, MEP, E21
- dans G8 :
   - A100, vérin, G, E100,
   - A100, vérin, D, E101.

La figure 4 représente un graphe de dépendance organisant les groupes G1 à G8 du système de la figure 1, auquel est associée une relation d'ordre partiel. Le graphe peut se lire de la façon suivante : G1 est en amont de G2, de G3, de G4, de G5, et de G6 ; G4 est en amont de G7 qui est en amont de G8. On pourrait remplacer l'expression « est en amont de » par l'expression « influe sur ». On voit bien sur cet exemple que la relation est une relation d'ordre partiel puisque G2, G3, G4, G5 et G6 sont au même niveau.

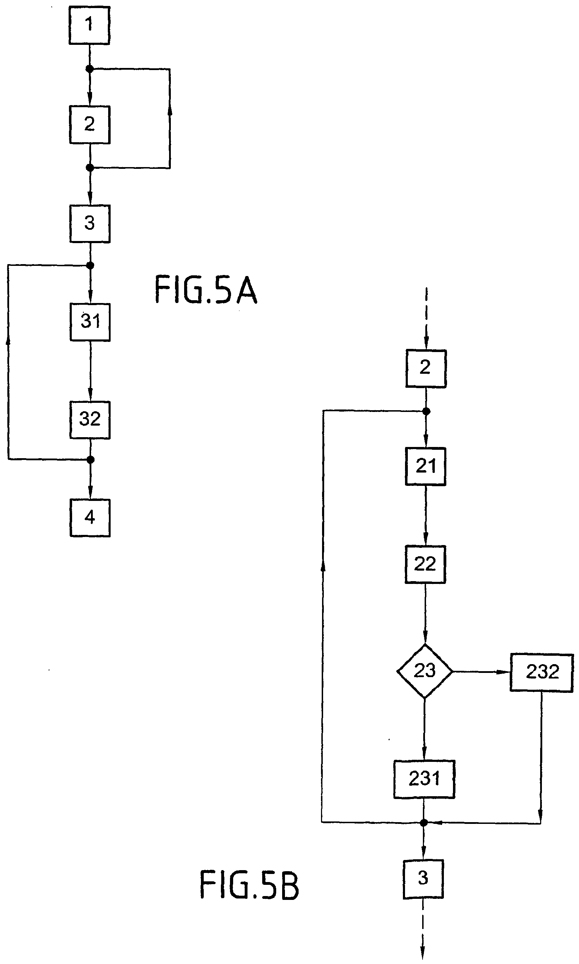

L'ensemble des éléments de la modélisation de l'exemple de la figure 1 ayant été décrit relativement aux figures 2, 3a, 3b et 4, nous allons maintenant décrire le procédé d'analyse de l'invention en référence aux figures 5a à 5d.

Dans la figure 5a, l'étape 1 du procédé de l'invention consiste en l'initialisation du modèle dans un état correspondant à un état donné du système. Un état donné du système est caractérisé par les valeurs des variables caractéristiques du système. L'étape 2 consiste en la création d'une liste de variables discordantes dans laquelle sont insérées les variables caractéristiques dont la valeur dans le système diffère de celles prédites par le modèle ou bien la valeur prédite par le modèle est incohérente par rapport à l'état du système. Cette étape 2 sera expliquée plus en détail par la suite en référence à la figure 5b.

De préférence, mais pas nécessairement, la liste de variables discordantes est triée selon le graphe de dépendance qui relie les groupes avec une relation d'ordre partielle, tel que décrit plus haut en référence à l'exemple de la figure 1 et à la figure 4. Ainsi, une variable discordante appartenant au groupe le plus en amont sera placée en tête de liste, et ainsi de suite.

Si la liste de variables discordantes est vide, une boucle renvoie à l'étape 2. Sinon, l'étape 2 est suivie d'une étape 3 de traitement, en boucle, c'est-à-dire pour chaque variable caractéristique de la liste de variables discordantes. Cette boucle de traitement comprend deux étapes successives. La première étape 31 est une étape de création d'une liste initiale de variables suspectes. Ces variables influentes suspectes sont des variables influentes potentiellement responsables de la valeur discordante de la variable discordante en cours de traitement. De préférence, mais pas nécessairement, ces variables seront toutes les variables influentes, faisant partie du groupe auquel appartient la variable caractéristique discordante en cours de traitement dans la boucle de l'étape 3. De préférence également, mais pas nécessairement, cette étape 31 de création de la liste initiale de variables suspectes est précédée d'un prédiagnostic pour sélectionner un sous-ensemble de variables suspectes parmi les variables influentes faisant partie du groupe auquel appartient la variable caractéristique discordante en cours de traitement dans la boucle de l'étape 3.

La deuxième étape 32 est une étape de création d'une liste restreinte de variables suspectes par filtrage de la liste initiale de variables suspectes. A l'issue de cette étape de traitement répétée pour chacune des variables caractéristiques de la liste de variables discordantes, on obtient à l'étape 4 une liste des responsables de la ou des discordances constatées à l'étape 2. Idéalement cette liste est réduite à un seul élément, ce qui permet de diagnostiquer efficacement et rapidement un problème.

La figure 5b décrit plus précisément en quoi consiste l'étape 2 mentionnée précédemment. Cette étape 2 comprend en effet une étape 21 de prédiction par le modèle de l'état du système à partir d'une commande ou d'un événement donné. Cette étape 21 est suivie d'une étape 22 de comparaison entre l'état prédit par le modèle avec l'état réel du système. L'étape 22 aboutit au branchement conditionnel 23 vers l'étape 231 ou l'étape 232. Précisément, lorsque la comparaison indique une différence au niveau des variables caractéristiques, l'étape 231 est mise en oeuvre pour insérer la ou les variables caractéristiques discordantes dans la liste de variables discordantes. Sinon, c'est-à-dire lorsque la comparaison n'indique aucune différence au niveau des variables caractéristiques et aucune incohérence par rapport à l'état du système (valeur dans le modèle identique à la valeur dans le système, mais incompatible avec l'état de celui-ci), l'étape 232 est mise en oeuvre pour mettre à jour le modèle et valider son état. L'étape 231 ou 232 est suivie de l'étape 3 décrite précédemment en référence à la figure 5a.

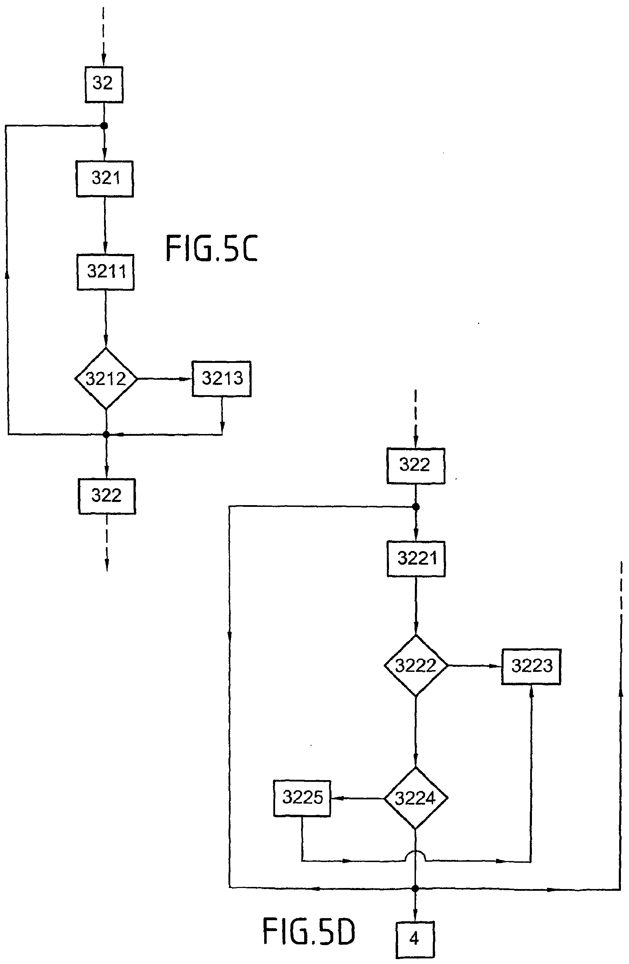

La figure 5c donne plus de détails sur l'étape 32 de création d'une liste restreinte de variables suspectes précédemment décrite en référence à la figure 5a. Cette étape 32 comprend en effet une première étape 321 de filtrage par élimination des variables suspectes qui ne génèrent pas la valeur discordante de la variable discordante en cours de traitement à l'étape 3. Cette étape 321 consiste plus précisément en une boucle sur chaque variable suspecte. Pour chacune de ces variables suspectes, une étape 3211 de prédiction par le modèle de l'état du système à partir du changement de valeur de la variable suspecte est mise en oeuvre, limitée au groupe de la variable discordante donc sans propagation aux autres groupes, avec comparaison de l'état du modèle et de l'état du système réel. L'étape 3211 aboutit au branchement conditionnel 3212 vers l'étape 3213 ou l'étape 322. Précisément, lorsque la comparaison, après changement (dans le modèle) de la valeur de la variable suspecte, n'indique pas de valeur discordante pour la variable caractéristique discordante considérée à l'étape 3 (autrement dit le modèle ne prédit plus, ou ne confirme pas, la discordance après ce changement de valeur de la variable suspecte), alors la variable suspecte en cours de traitement dans la boucle rentre dans la liste restreinte de variables suspectes. Sinon (la comparaison confirme la discordance, toujours présente malgré le changement de valeur de la variable suspecte), la variable suspecte en cours de traitement dans la boucle ne rentre pas dans la liste restreinte de variables suspectes (étape 3213).

La liste de variables suspectes ayant été filtrée une première fois, on aboutit à la deuxième étape de filtrage 322 qui va maintenant être décrite plus en détail en référence à la figure 5d. Cette deuxième étape de filtrage comprend, en boucle pour chaque variable suspecte, une étape 3221 de prédiction par le modèle de l'état du système à partir du changement de la valeur de la variable suspecte, avec propagation dans tous les groupes dans lesquelles cette variable suspecte est une variable influente. L'état prédit par le modèle est comparé avec l'état réel du système pour aboutir au branchement conditionnel 3222 vers l'étape 3223 ou le second branchement conditionnel 3224. Précisément, lorsque la comparaison, après changement (dans le modèle) de la valeur de la variable suspecte, n'indique pas de valeur discordante pour une quelconque autre variable caractéristique que la variable caractéristique discordante en cours de traitement à l'étape 3 et qui est pourtant présente dans la liste de variables discordantes, alors la variable suspecte sort de la liste restreinte de variables suspectes (étape 3223). Sinon, c'est-à-dire si la comparaison n'indique pas de valeur discordante pour une quelconque autre variable caractéristique que la variable caractéristique discordante en cours de traitement à l'étape 3 et qui est pourtant présente dans la liste de variables discordante, un second test est effectué au niveau du branchement conditionnel 3224 vers l'étape 3225 ou la fin de la boucle. Précisément, si la comparaison, après changement de la valeur de la variable suspecte, indique une valeur discordante pour une quelconque autre variable caractéristique que la variable discordante en cours de traitement à l'étape 3, et qui n'est par ailleurs pas présente dans la liste de variables discordantes, alors la variable suspecte sort de la liste restreinte des variables suspectes (étape 3225). Sinon, elle n'est pas éliminée et reste donc dans la liste restreinte de variables suspectes délivrée à l'étape finale 4.

Autrement dit, dans les étapes de comparaisons décrites ci-dessus, on regarde , après changement de la valeur de la variable suspecte, si une discordance initialement relevée n'est pas confirmée ou si une discordance non initialement relevée est générée. Si tel est le cas, la variable suspecte est éliminée en tant que suspecte par le filtre. Sinon, elle est conservée.

La division de l'étape 32 de création d'une liste restreinte de variables suspectes par filtrage de la liste initiale de variables suspectes, en deux sous-étapes successives de filtrage 321 et 322, n'est pas limitative de l'invention mais simplement une optimisation. Cette division est basée sur l'idée que l'on peut dans un premier temps réaliser le filtrage par rapport à la variable discordante en cours de traitement à l'étape 3, pour aboutir à une première réduction de la liste de suspects. Ceci permet ensuite de mettre en oeuvre la deuxième étape de filtrage 322 par rapport à toutes les autres variables caractéristiques discordantes, à partir d'une liste de suspects de taille réduite.

De préférence, mais pas nécessairement, après que l'étape 3 de traitement a été répétée pour chacune des variables de la liste de variables discordantes, une étape d'investigation localisée supplémentaire est mise en oeuvre. Cette étape peut par exemple être basée sur des informations fournies par un opérateur et hiérarchisées.

Eventuellement, mais pas nécessairement, après que l'étape 3 de traitement a été répétée pour chacune des variables de la liste de variables discordantes, une nouvelle étape est mise en oeuvre qui consiste à vérifier si une nouvelle variable caractéristique discordante est apparue, et si oui, à mettre en oeuvre une étape supplémentaire de filtrage pour éliminer toutes les variables influentes suspectes de la liste restreinte de variables suspectes qui ne génèrent pas la valeur discordante de cette nouvelle variable caractéristique discordante. Ce filtrage procède du même principe que les différents filtrages décrits précédemment.

De préférence, mais pas nécessairement, lors de la mise en oeuvre de l'étape 2 de création de la liste de variables discordantes, on n'utilise pas le modèle complet mais le modèle simplifié décrit précédemment. Ainsi, lors de cette étape, on ne prend pas en compte l'influence des variables influentes intermédiaires.

Le procédé de l'invention ayant été décrit en référence aux figures 5a à 5d, et la modélisation du système simplifié de la figure 1 ayant été décrite en référence aux figures 2, 3a, 3b et 4, nous allons maintenant décrire un exemple d'application à l'analyse du système de la figure 1 avec diagnostic dans deux scénarios différents.

Nous supposons que l'état courant du système est le suivant : le système est alimenté en 24 volts, la mise en service et la mise en puissance ont été effectuées, et le vérin est en position rentrée c'est-à-dire position de gauche. Cet état courant est donc caractérisé par : MEP=1 (E21=1), MES=1 (E22=1), A100=0 (EV=0), G=1 (E100=1), D=0 (E101=0) car le vérin est en position rentrée, 24V=1 (E20=1).

Comme décrit précédemment, le modèle est donc initialisé, à l'étape 1 de la figure 5a, dans l'état courant du système réel décrit ci-dessus. L'étape 2 de la figure 5a, et telle que détaillée à la figure 5b, est alors mise en oeuvre. La commande A100 est reçue, c'est-à-dire la commande de l'électrovanne pour faire sortir le vérin. Le modèle direct prédit donc, à l'étape 21 de la figure 5b, la sortie immédiate du vérin, donc le relâcher de G. Le modèle direct indique donc la disparition immédiate de E100 : E100=0.

Le système réel change d'état et indique E100=0 (toute autre variable caractéristique restant inchangée). E100=0 a été prédit, donc l'étape 22 de comparaison de la figure 5b n'indique aucune discordance entre le système réel et le modèle. Par conséquent, on met à jour l'état du modèle (étape 232 de la figure 5b), c'est-à-dire que le vérin quitte la position gauche, et une nouvelle prédiction par le modèle est mise en oeuvre, parallèlement au fonctionnement du système réel (boucle sur l'étape 2 de la figure 5a).

Le modèle prédit alors, à l'étape 21 des figures 5a et 5b, l'apparition de D, donc D=1, dans 5 secondes, et prédit donc E101=1 dans 5 secondes.

A partir de cette situation, nous allons envisager deux scénarios qui vont nécessiter un diagnostic.

### Scénario 1 :

Nous supposons que le relais MES casse physiquement. On constate donc dans le système réel la disparition de E22, soit E22=0, et presque simultanément la disparition de E21, soit E21=0. Par ailleurs, l'électrovanne stoppe, car EV tombe à 0, et le vérin arrête de sortir pour retourner à la position rentrée c'est-à-dire la position de gauche. G=1 apparaît 2 secondes après. Mais E100=1 n'apparaît pas car MES, étant cassé, ne l'alimente plus.

Le modèle, qui n'a bien sûr pas intégré le fait que le relais MES est cassé, indique donc E22=1 et E21=1. La comparaison, à l'étape 22 de la figure 5b, révèle donc deux variables caractéristiques discordantes qui sont insérée dans la liste de variables discordantes : E22 concerne le groupe G4 ou groupe MES (ou encore axe MES), et E21 concerne le groupe G7, ou groupe MEP (ou encore axe MEP).

La liste de variables discordantes contenant E22 et E21 est, de préférence, triée relativement au graphe de dépendance de la figure 4 : G4 est en amont de G7 (MES est en amont de MEP), E22 est donc placée en tête de la liste.

Ensuite est mise en oeuvre en boucle sur la liste de variables discordante l'étape générale de traitement 3 de la figure 5a. Dans un premier temps, à l'étape 31 de la figure 5a, le modèle complet (qui intègre toutes les variables influentes intermédiaires) nous indique que dans le groupe G4, les suspects sont : 24V, contact MES, bobine MES, et fusible FUS1. L'influence de chacun de ces suspects va donc être analysée, en modifiant un par un leur valeur dans le modèle, au cours de l'étape 32 de la figure 5a. Plus précisément, cette étape 32 se subdivise en une étape 321 et une étape 322.

Donc, tout d'abord, l'étape 321 est mise en oeuvre, sur chaque suspects préalablement identifié, pour déterminer quels sont ceux parmi ces suspects dont la responsabilité potentielle dans l'apparition de la valeur discordance en cours de traitement à l'étape 3 (ici E22) est confirmée, et qui seront donc conservés dans la liste des suspects.

L'étape 3211 est mise en oeuvre pour le suspect 24V : celui-ci est à 1 dans le modèle, on suppose donc maintenant qu'a eu lieu la disparition de 24V, soit 24V=0 (cela implique que la bobine MES est à 0, donc que le contact MES est à 0 donc que E22=0). La discordance sur E22 est donc bien confirmée, et le suspect 24V est conservé (étape 3213).

L'étape 3211 est mise en oeuvre pour le suspect contact MES : celui-ci est à 1 dans le modèle, on va donc changer sa valeur et le mettre à 0. La conséquence évidente d'après le modèle est que E22 passe à 0. Là encore, ce changement sur le contact MES confirme la discordance. Le contact MES est donc conservé comme suspect (étape 3213).

L'étape 3211 est mise en oeuvre pour le suspect bobine MES : MES est à 1 dans le modèle, on change donc sa valeur à 0, ce qui implique que le contact MES passe à 0, et donc là encore que E22 passe à 0. Le suspect bobine MES est conservé (étape 3213).

Le dernier suspect de la liste initiale de suspects est le fusible FUS1, sur lequel l'étape 3211 est mise en oeuvre : FUS1 est à 1 (état correct de fonctionnement) dans le modèle, on va donc maintenant le considérer comme défectueux et le placer à 0. Alors, cela implique que la bobine MES passe à 0, puis que le contact MES passe à 0, et qu'enfin E22 passe à 0. Une nouvelle fois, la discordance sur E22 est confirmée, FUS1 est donc conservé dans la liste de suspects (étape 3213).

L'étape suivante va donc consister à filtrer à nouveau la liste de suspects (étape 322 de la figure 5d, en boucle sur la liste des suspects), en ne s'attachant plus uniquement au groupe G4 mais également aux autres groupes. Cette étape consiste donc à propager les changement de valeur aux autres groupes.

A l'étape 3221, on reprend donc le suspect 24V, et on examine les conséquences de sa disparition étendues aux autres groupes. 24V passe à 0 (donc E20, E21 et E22 passent à 0), et EV, MEP, MES passent à 0 sans changement immédiat des valeurs des variables caractéristiques. L'étape 3223 n'est pas mise en oeuvre puisque la comparaison n'indique pas de disparition de discordance (E21 et E22 discordantes sont bien prédites). Par contre, dans le système réel, E20 est égal à 1, et la discordance sur E20 n'a pas été enregistrée dans la liste de variables discordantes. 24V est donc enlevé de la liste de suspects et ne fera pas partie de la liste restreinte de suspects, conformément au déroulement de l'étape 3225.

Ensuite, l'étape 3221 est à nouveau mise en oeuvre sur le suspect contact MES : on fait passer le contact MES à 0 (on simule la casse du contact MES), alors le modèle prédit la disparition de E22 (E22=0), et MEP=0 donc E21=0. Par ailleurs MEP=0 arrête l'électrovanne, donc EV passe à 0, le mouvement négatif du vérin s'enclenche et l'on prédit l'apparition de G dans un certain temps, et la disparition de D (mais pas de E100=1 car MES=0). Ceci est conforme à l'état du système réel et confirme les deux discordances initialement relevées (E21 et E22). En effet, on n'a fait que confirmer les discordances préalablement enregistrées dans la liste de variables discordantes (l'étape 3223 n'est donc pas mise en oeuvre).

Le même procédé est à nouveau mis en oeuvre pour la bobine MES, avec de toute évidence le même résultat, que nous ne détaillons donc pas de nouveau ici. Le suspect bobine MES est conservé dans la liste restreinte de suspects.

Enfin, la casse du fusible FUS1 est envisagée, FUS1=0. En conséquence MES et MEP passent à 0, et l'on obtient à nouveau la même propagation. Le suspect FUS1 est donc conservé dans la liste restreinte de suspects.

A ce stade, si la notion de synchronisation est intégrée dans le modèle, et avec une mesure très fine, on pourrait distinguer le cas du fusible FUS1 de ceux du contact et de la bobine MES. En effet, si le fusible casse, les disparitions de MES et MEP seront synchrones, alors que sinon, la disparition de MES entraîne la disparition de MEP, avec un décalage temporel de 100 à 200 ms par exemple entre le passage de E22 à 0 et le passage de E21 à 0.

Le procédé de l'invention indique qu'il faut maintenant recommencer le traitement sur la seconde variable de la liste de variables discordantes, soit E21 (boucle principale sur l'étape de traitement 3 de la figure 5a). Là encore, nous ne détaillons pas de nouveau cette étape appliquée à la variable caractéristique discordante E21, car elle est en tous points similaire à celle qui vient d'être décrite pour E22, et les résultats sont inchangés : le relais MES (bobine et contact) et éventuellement le fusible FUS1 sont conservés comme suspects.

La localisation du problème s'en trouve fortement facilitée, et des dernières vérifications manuelles permettent alors de constater que le relais MES est cassé.

### Scénario 2 :

Supposons maintenant que, non plus le relais MES, mais le capteur D casse. D reste donc bloqué à 0. On constate alors dans le système réel, au bout de 5 secondes (+ une tolérance) que E101 ne passe pas à 1. Or le modèle a prédit E101=1, et l'on crée donc, par la mise en oeuvre des étapes 21 et 22 de la figure 5b, la liste de variables discordantes en y insérant E101.

La liste est donc réduite à un seul élément, d'où l'inutilité d'un quelconque tri. L'unique discordance est donc traitée à l'étape 3 de la figure 5a (une boucle ne sera bien sûr pas nécessaire). Pour commencer, les suspects appartenant au groupe G8 dans lequel se trouve E101 sont identifiés à l'étape 31 de la figure 5a : le relais MES est le premier suspect mais il n'est pas conservé dans cette liste initiale de variables suspectes, car il est en amont dans le graphe de dépendance de la figure 4 et devrait donc avoir été traité avant (s'il était à 0, il y aurait discordance dans G4, déjà traité d'après la hiérarchie du graphe de dépendance) ; même remarque pour le relais MEP ; les autres suspects sont le fusible FUE1, le capteur D, le fusible FUS2, le vérin lui-même qui peut être coincé.

L'étape 32 de la figure 5a est donc mise en oeuvre, avec pour commencer la boucle 321 de la figure 5c sur chacun des suspects. A l'étape 3211 de la figure 5c, on constate que la casse du fusible FUE1, donc FUE1 = 0, entraîne le maintient de E101 à 0. La discordance n'apparaît plus, le suspect FUE1 est donc conservé (étape 3213). Il en va de même pour le capteur D et le vérin coincé.

De nouveau à l'étape 3211, cette fois la casse du fusible FUS2 est envisagée, qui entraîne l'arrêt de l'électrovanne donc le retour du vérin en position rentrée, donc G=1, au bout de 3 secondes. Ceci est une nouvelle discordance (ou un nouvel événement discordant) qui n'appartient pas à la liste de variables discordantes. Ce changement sur FUS2 a donc entraîné l'apparition d'une nouvelle discordance. FUS2 n'est donc pas conservé dans la liste de suspects (l'étape 3213 n'est pas mise en oeuvre).

On reprend maintenant la liste de suspects pour la filtrer une nouvelle fois, conformément à l'étape 322 de la figure 5d.

A l'étape 3221, on reprend FUE1 en le faisant passer à 0, ce qui implique que E100=0 et E101=0. Si E100=1 apparaît par la suite, FUE1 sera supprimé de la liste. Mais à ce stade, il est confirmé.

De nouveau à l'étape 3221, on envisage la casse du capteur D, ce qui entraîne la disparition de D. La discordance préalablement détectée est confirmée, et il n'y a apparition d'aucune nouvelle discordance. Ni l'étape 3223, ni l'étape 3225 ne sont mises en oeuvre. Le capteur D reste dans la liste restreinte de suspects. Il en va de même du vérin coincé.

On envisage enfin, de retour à l'étape 3221, la casse du fusible FUS2 ce qui entraîne EV=0 donc un retour du vérin en position rentrée, donc la prédiction de l'apparition de G dans 3 secondes (ou E100=1 dans 3 secondes). Pour les mêmes raisons que pour le suspect capteur D, FUS2 est donc conservé dans la liste restreinte de suspects.

Quatre suspects restent donc dans la liste à ce stade. Mais 3 secondes (plus une certaine tolérance) plus tard, E100=1 n'apparaît pas dans le système réel. Cette constatation permet d'éliminer le suspect FUS2 de la liste restreinte de suspects.

On continue donc avec des investigations localisées : dès que l'on appuie sur le bouton poussoir de mise hors puissance BPMHP pour intervenir sur le vérin, le vérin revient en position rentrée, donc E100=1 apparaît, ce qui permet d'éliminer le suspect FUE1 et le vérin coincé de la liste.

En final, il reste un unique suspect : le capteur D. Cela rend le diagnostic pour le moins aisé.

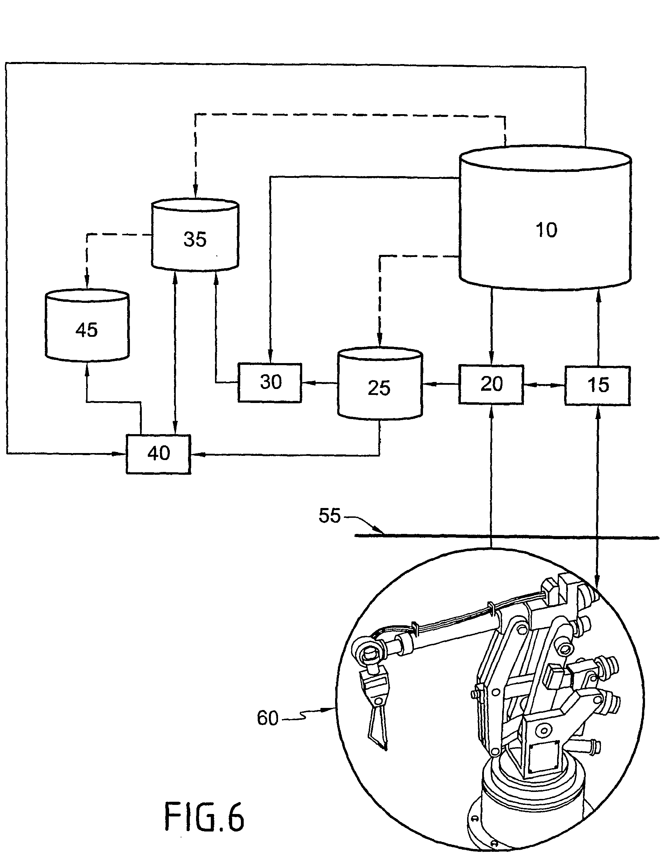

Enfin, la figure 6 représente schématiquement un dispositif d'analyse selon l'invention, qui permet de mettre en oeuvre le procédé de l'invention décrit précédemment.

Le dispositif comprend ainsi des moyens 10 de stockage des données qui définissent le modèle du système réel 60 que l'on veut analyser. Le dispositif comprend également des moyens 15 de traitement qui permettent la mise en oeuvre du modèle, et des moyens 20 de comparaison de l'état du système prédit par le modèle et l'état du système réel. Ces moyens 20 et 15 communiquent avec le système réel par le biais d'une interface de communication classique. Les moyens 20 de comparaison délivrent une liste de variables caractéristiques discordantes qui est stockée grâce aux moyens de stockage 25. Le dispositif comprend également des moyens 30 de sélection, dans le modèle, de variables influentes suspectes pouvant avoir généré la valeur discordante d'au moins une variable caractéristique discordante. Le dispositif comprend en outre des moyens 40 de filtrage des variables influentes suspectes sélectionnées par les moyens 30 de sélection, qui permettent d'obtenir les variables influentes suspectes en nombre restreint. Les variables influentes suspectes initiales, et les variables influentes suspectes en nombre restreint après filtrage par les moyens 40 de filtrage, sont respectivement stockées par les moyens de stockage 35 et 45.

Le procédé de l'invention, mis en oeuvre par un tel dispositif, peut donc avantageusement être utilisé pour l'analyse d'un système industriel piloté par des automates de commande.

L'ensemble de cette description est donné à titre d'exemple et est non limitatif de l'invention. En particulier, la description du dispositif de l'invention sépare les moyens de stockage 10, 25, 35 et 45. Mais on conçoit très bien qu'un unique moyen de stockage puisse être utilisé à ces fins.

Par ailleurs, la méthode pour obtenir le modèle servant de base à la mise en oeuvre du procédé de l'invention, n'est pas limitative de l'invention. Toute méthode (adaptation d'un modèle connu, principe de l'apprentissage, ...) qui permet d'aboutir à un modèle défini par des variables caractéristiques et des variables influentes, l'ensemble de ces variables étant réparti dans un ou plusieurs groupes, peut être utilisée.

## Revendications

1. Procédé d'analyse en vue d'émettre un diagnostic sur le fonctionnement d'un système réel, ledit procédé étant basé sur l'utilisation d'un modèle dudit système réel, ledit modèle comprenant au moins deux variables associées à des capteurs du système réel et réparties dans un ou plusieurs groupes et stockées dans des premiers moyens (10) de stockage de données, chacun desdits groupes étant défini par et comprenant une ou plusieurs variables appelées variables caractéristiques et regroupant toutes les autres variables, appelées variables influentes, ayant une influence directe ou indirecte sur la valeur d'au moins une desdites variables caractéristiques dudit groupe, **caractérisé en ce qu'**il comprend :
- une étape (1) d'initialisation du modèle dans un état correspondant à un état donné du système réel par l'intermédiaire de premiers moyens (15) de traitement qui communiquent avec le système réel par le biais d'une interface de communication (55),
- une étape (2) de création d'une liste, dite liste de variables discordantes, de variables caractéristiques dont la valeur prédite par le modèle est non vérifiée dans ledit système réel, et de stockage de cette dite liste de variables discordantes dans des deuxièmes moyens (25) de stockage de données, par l'intermédiaire de moyens (20) de comparaison qui communiquent avec le système réel par le biais de l'interface de communication (55), cette dite étape (2) de création de la liste de variables discordantes comprenant :
i. une étape (21) de prédiction par le modèle de l'état du système réel à partir d'une commande donnée,
ii. une étape (22) de comparaison de l'état prédit avec l'état réel du système après mise en oeuvre de ladite commande donnée,
et pour chaque variable caractéristique de ladite liste de variables discordantes, un traitement (3) comprenant :
- une étape (31) de création d'une liste, dite liste initiale de variables suspectes, de variables influentes pouvant avoir généré la valeur discordante de ladite variable discordante, et de stockage de cette dite liste initiale de variables suspectes dans des troisièmes moyens (35) de stockage de données, par l'intermédiaire de moyens (30) de sélection,
- une étape (32) de création d'une liste, dite liste restreinte de variables suspectes, par filtrage de ladite liste initiale de variables suspectes, et de stockage de cette dite liste restreinte de variables suspectes dans des quatrièmes moyens (45) de stockage de données, par l'intermédiaire de moyens (40) de filtrage.

2. Procédé selon la revendication 1, **caractérisé en ce qu'**il comprend :
- lorsque ladite étape (22) de comparaison indique une différence entre les valeurs respectives d'une ou plusieurs variables caractéristiques dans l'état prédit et les valeurs respectives de ces dites variables caractéristiques dans l'état réel du système, une étape (231) d'insertion dans ladite liste de variables discordantes des variables discordantes,
- lorsque ladite étape (22) de comparaison n'indique aucune différence entre la valeur d'une variable caractéristique dans l'état prédit et la valeur de cette variable définissante dans l'état réel du système, une étape (232) de mise à jour du modèle pour valider son état.

3. Procédé selon l'une quelconque des revendications 1 et 2, **caractérisé en ce que** ladite étape (31) de création d'une liste initiale de variables suspectes consiste à sélectionner toutes les variables influentes faisant partie du groupe auquel appartient ladite variable discordante considérée à l'étape (3).

4. Procédé selon l'une quelconque des revendications 1 à 3, **caractérisé en ce que** ladite étape (32) de création d'une liste restreinte de variable suspectes consiste en l'élimination desdites variables suspectes de ladite liste initiale de variables suspectes qui :
- soit ne génèrent pas dans le modèle, pour chacune des variables appartenant à ladite liste de variables discordantes, de valeur discordante,
- soit génèrent dans le modèle, pour au moins une variable caractéristique n'appartenant pas à ladite liste de variables discordantes, une valeur discordante.

5. Procédé selon l'une quelconque des revendications 1 à 4, **caractérisé en ce que** ladite étape (32) de création d'une liste restreinte de variable suspectes comprend :
- une première étape de filtrage (321) par élimination desdites variables suspectes ne générant pas la valeur discordante de ladite variable discordante considérée à l'étape (3),
- une deuxième étape de filtrage (322) par élimination desdites variables suspectes qui :
i. soit génèrent une valeur discordante pour une ou plusieurs autres variables caractéristiques que ladite variable discordante considérée à l'étape (3) et qui n'appartiennent pas à ladite liste de variables discordantes,
ii. soit ne génèrent pas de valeur discordante pour une ou plusieurs autres variables caractéristiques que ladite variable discordante considérée à l'étape (3) et qui appartiennent à ladite liste de variables discordantes.

6. Procédé selon l'une quelconque des revendications 1 à 5, **caractérisé en ce que** l'étape (31) de création d'une liste initiale de variables suspectes comprend un pré-diagnostic pour sélectionner un sous-ensemble des variables suspectes parmi les variables influentes faisant partie du groupe auquel appartient ladite variable discordante considérée à l'étape (3).

7. Procédé selon l'une quelconque des revendications 1 à 6, **caractérisé en ce que**, préalablement à l'étape (31) de création d'une liste initiale de variables suspectes, ladite liste de variables discordantes est triée.

8. Procédé selon la revendication 7, **caractérisé en ce que** le tri est basé sur une relation d'ordre partiel associée à un graphe de dépendance qui ordonne lesdits groupes du modèle, la variable caractéristique discordante appartenant au groupe de rang le plus élevé étant placée en première position et ainsi de suite.

9. Procédé selon l'une quelconque des revendications 1 à 8, **caractérisé en ce qu'**il comprend, après que l'étape (3) de traitement a été répétée pour chacune des variables de ladite liste de variables discordantes, une étape d'investigations localisées.

10. Procédé selon l'une quelconque des revendications 1 à 9, **caractérisé en ce qu'**il comprend, après que l'étape (3) de traitement a été répétée pour chacune des variables de ladite liste de variables discordantes, et lorsqu'une nouvelle variable caractéristique discordante est apparue, une étape supplémentaire de filtrage pour éliminer toutes les variables influentes suspectes issues de la répétition de l'étape (3) qui ne génèrent pas la valeur discordante de ladite nouvelle variable caractéristique discordante.

11. Procédé selon l'une quelconque des revendications 1 à 10, **caractérisé en ce que**, une variable influente sur laquelle aucune autre variable du même groupe n'influe étant appelée variable influente primaire, un modèle simplifié est construit à partir du modèle initial en ne tenant compte, dans chaque groupe, que des variables influentes primaires et des variables caractéristiques.

12. Procédé selon la revendication 11, **caractérisé en ce que** ledit modèle simplifié est utilisé à la place du modèle initial dans ladite étape (2) de création de ladite liste de discordances.

13. Dispositif d'analyse en vue d'émettre un diagnostic sur le fonctionnement d'un système réel, ledit dispositif étant basé sur l'utilisation d'un modèle dudit système réel, ledit modèle comprenant au moins deux variables associées à des capteurs du système réel et réparties dans un ou plusieurs groupes, chacun desdits groupes étant défini par et comprenant une ou plusieurs variables appelées variables caractéristiques et regroupant toutes les autres variables, appelées variables influentes, ayant une influence directe ou indirecte sur la valeur d'au moins une desdites variables caractéristiques dudit groupe, et mettant en oeuvre le procédé selon l'une quelconque des revendications 1 à 12, **caractérisé en ce qu'**il comprend :
a. une interface de communication (55) apte à permettre la communication entre le dispositif d'analyse et le système réel,
b. des premiers moyens (10) de stockage des données définissant le modèle,
c. des moyens (15) de traitement pour mettre en oeuvre le modèle, ces dits moyens (15) de traitement étant aptes à communiquer avec le système par le biais de ladite interface de communication (55),
d. des moyens (20) de comparaison de l'état du système prédit par le modèle et l'état du système réel, ces dits moyens (20) de comparaison étant aptes à communiquer avec le système par le biais de ladite interface de communication (55),
e. des deuxièmes moyens (25) de stockage d'une liste de variables caractéristiques discordantes issue de la comparaison par lesdits moyens (20) de comparaison,
f. des moyens (30) de sélection, dans le modèle, des variables influentes suspectes initiales pouvant avoir généré la valeur discordante d'au moins une variable caractéristique discordante,
g. des moyens (40) de filtrage desdites variables influentes suspectes initiales pour obtenir les variables influentes suspectes restreintes,
h. des troisièmes et quatrièmes moyens de stockage (35) et (45) respectivement desdites variables influentes suspectes initiales et desdites variables influentes suspectes restreintes.

14. Utilisation du procédé selon l'une quelconque des revendications 1 à 12, pour l'analyse d'un système industriel piloté par des automates de commande.

## Patentansprüche

1. Analyseverfahren zum Erstellen einer Diagnose über den Betrieb eines realen Systems, wobei das Verfahren auf der Verwendung eines Modells des realen Systems basiert, wobei das Modell wenigstens zwei Variablen umfasst, die Sensoren des realen Systems zugeordnet sind und die in eine oder mehrere Gruppen aufgeteilt und in ersten Datenspeicherungsmitteln (10) gespeichert sind, wobei eine jede der Gruppen durch eine oder mehrere als charakteristische Variablen bezeichnete Variablen definiert ist und sie umfasst und alle anderen als einflussreiche Variablen bezeichneten Variablen, die einen direkten oder indirekten Einfluss auf den Wert von wenigstens einer der charakteristischen Variablen der Gruppe haben, zusammenfasst, **dadurch gekennzeichnet, dass** es umfasst:
- einen Schritt (1) zur Initialisierung des Modells in einem Zustand, der einem gegebenen Zustand des realen Systems entspricht, durch erste Verarbeitungsmittel (15), die mit dem realen System mittels einer Kommunikationsschnittstelle (55) in Verbindung stehen,
- einen Schritt (2) zum Erzeugen einer Liste, sogenannten Liste unstimmiger Variablen, von charakteristischen Variablen, deren durch das Modell vorhergesagter Wert in dem realen System nicht bestätigt ist, und zur Speicherung dieser Liste unstimmiger Variablen in zweiten Datenspeicherungsmitteln (25), durch Vergleichsmittel (20), die mit dem realen System mittels der Kommunikationsschnittstelle (55) in Verbindung stehen, wobei dieser Schritt (2) zur Erzeugung der Liste unstimmiger Variablen umfasst:
i. einen Schritt (21) zur Vorhersage, durch das Modell, des Zustands des realen Systems anhand eines gegebenen Befehls,
ii. einen Schritt (22) zum Vergleichen des vorhergesagten Zustands mit dem Ist-Zustand des Systems nach Ausführen des gegebenen Befehls,
und für jede charakteristische Variable der Liste von unstimmigen Variablen, eine Verarbeitung (3), die umfasst:
- einen Schritt (31) zum Erzeugen einer Liste, sogenannten Ausgangsliste auffälliger Variablen, von einflussreichen Variablen, die den unstimmigen Wert der unstimmigen Variablen erzeugt haben können, und zur Speicherung dieser Ausgangsliste auffälliger Variablen in dritten Datenspeicherungsmitteln (35), durch Auswahlmittel (30),
- einen Schritt (32) zum Erzeugen einer Liste, sogenannten begrenzten Liste auffälliger Variablen, durch Filtern der Ausgangsliste auffälliger Variablen, und zur Speicherung dieser begrenzten Liste auffälliger Variablen in vierten Datenspeicherungsmitteln (45), durch Filtermittel (40).

2. Verfahren nach Anspruch 1, **dadurch gekennzeichnet, dass** es umfasst:
- wenn der Vergleichsschritt (22) eine Differenz zwischen den jeweiligen Werten einer oder mehrerer charakteristischer Variablen im vorhergesagten Zustand und den jeweiligen Werten dieser charakteristischen Variablen im Ist-Zustand des Systems anzeigt, einen Schritt (231) zum Einfügen der unstimmigen Variablen in die Liste von unstimmigen Variablen,
- wenn der Vergleichsschritt (22) keine Differenz zwischen dem Wert einer charakteristischen Variablen im vorhergesagten Zustand und dem Wert dieser definierenden Variablen im Ist-Zustand des Systems anzeigt, einen Schritt (232) zur Aktualisierung des Modells, um seinen Zustand zu bestätigen.

3. Verfahren nach einem der Ansprüche 1 und 2, **dadurch gekennzeichnet, dass** der Schritt (31) zum Erzeugen einer Ausgangsliste auffälliger Variablen darin besteht, alle einflussreichen Variablen auszuwählen, die zu der Gruppe gehören, zu der die bei Schritt (3) betrachtete unstimmige Variable gehört.

4. Verfahren nach einem der Ansprüche 1 bis 3, **dadurch gekennzeichnet, dass** der Schritt (32) zum Erzeugen einer begrenzten Liste auffälliger Variablen darin besteht, aus der Ausgangsliste auffälliger Variablen die auffälligen Variablen zu beseitigen, die:
- entweder bei dem Modell, für jede der zu der Liste unstimmiger Variablen gehörenden Variablen, keinen unstimmigen Wert generieren,
- oder die bei dem Modell, für wenigstens eine charakteristische Variable, die nicht zu der Liste unstimmiger Variablen gehört, einen unstimmigen Wert generieren.

5. Verfahren nach einem der Ansprüche 1 bis 4, **dadurch gekennzeichnet, dass** der Schritt (32) zum Erzeugen einer begrenzten Liste auffälliger Variablen umfasst:
- einen ersten Filterschritt (321) durch Entfernen der auffälligen Variablen, die nicht den unstimmigen Wert der bei Schritt (3) betrachteten unstimmigen Variablen generieren,
- einen zweiten Filterschritt (322) durch Entfernen der auffälligen Variablen, die:
i. entweder einen unstimmigen Wert für eine oder mehrere andere charakteristische Variablen als die bei Schritt (3) betrachtete unstimmige Variable generieren und die nicht zu der Liste unstimmiger Variablen gehören,
ii. oder die keinen unstimmigen Wert für eine oder mehrere andere charakteristische Variablen als die bei Schritt (3) betrachtete unstimmige Variable generieren und die zu der Liste unstimmiger Variablen gehören.

6. Verfahren nach einem der Ansprüche 1 bis 5, **dadurch gekennzeichnet, dass** der Schritt (31) zum Erzeugen einer Ausgangsliste auffälliger Variablen eine Vordiagnose umfasst, um eine Teilmenge der auffälligen Variablen aus den einflussreichen Variablen, die zu der Gruppe gehören, zu der die bei Schritt (3) betrachtete unstimmige Variable gehört, auszuwählen.

7. Verfahren nach einem der Ansprüche 1 bis 6, **dadurch gekennzeichnet, dass** vor Schritt (31) zum Erzeugen einer Ausgangsliste auffälliger Variablen die Liste unstimmiger Variablen sortiert wird.

8. Verfahren nach Anspruch 7, **dadurch gekennzeichnet, dass** das Sortieren auf einer Halbordnungsrelation basiert, die einem Abhängigkeitsgraphen zugeordnet ist, welcher die Gruppen des Modells ordnet, wobei die unstimmige charakteristische Variable, die zu der ranghöchsten Gruppe gehört, an erster Position platziert ist, und so weiter.

9. Verfahren nach einem der Ansprüche 1 bis 8, **dadurch gekennzeichnet, dass** es, nachdem der Verarbeitungsschritt (3) für jede der Variablen der Liste unstimmiger Variablen wiederholt worden ist, einen Schritt stellenweiser Untersuchungen umfasst.

10. Verfahren nach einem der Ansprüche 1 bis 9, **dadurch gekennzeichnet, dass** es, nachdem der Verarbeitungsschritt (3) für jede der Variablen der Liste unstimmiger Variablen wiederholt worden ist, und wenn eine neue unstimmige charakteristische Variable aufgetreten ist, einen zusätzlichen Filterschritt umfasst, um alle aus der Wiederholung des Schrittes (3) hervorgegangenen auffälligen, einflussreichen Variablen zu entfernen, die nicht den unstimmigen Wert der neuen unstimmigen charakteristischen Variablen generieren.

11. Verfahren nach einem der Ansprüche 1 bis 10, **dadurch gekennzeichnet, dass** wenn eine einflussreiche Variable, die von keinerlei anderen Variablen der gleichen Gruppe beeinflusst wird, als primäre einflussreiche Variable bezeichnet wird, ein vereinfachtes Modell anhand des Ausgangsmodells erstellt wird, indem in jeder Gruppe nur primäre einflussreiche Variablen und charakteristische Variablen berücksichtigt werden.

12. Verfahren nach Anspruch 11, **dadurch gekennzeichnet, dass** das vereinfachte Modell anstelle des Ausgangsmodells in Schritt (2) zum Erzeugen der Liste von Unstimmigkeiten verwendet wird.

13. Analysevorrichtung zum Erstellen einer Diagnose über den Betrieb eines realen Systems, wobei die Vorrichtung auf der Verwendung eines Modells des realen Systems basiert, wobei das Modell wenigstens zwei Variablen umfasst, die Sensoren des realen Systems zugeordnet sind und die in eine oder mehrere Gruppen aufgeteilt sind, wobei eine jede der Gruppen durch eine oder mehrere als charakteristische Variablen bezeichnete Variablen definiert ist und sie umfasst und alle anderen als einflussreiche Variablen bezeichneten Variablen, die einen direkten oder indirekten Einfluss auf den Wert von wenigstens einer der charakteristischen Variablen der Gruppe haben, zusammenfasst, und das Verfahren nach einem der Ansprüche 1 bis 12 durchführt, **dadurch gekennzeichnet, dass** sie umfasst:
a. eine Kommunikationsschnittstelle (55), die geeignet ist, die Kommunikation zwischen der Analysevorrichtung und dem realen System zu ermöglichen,
b. erste Mittel (10) zum Speichern der das Modell definierenden Daten,
c. Verarbeitungsmittel (15) zur Anwendung des Modells, wobei diese Verarbeitungsmittel (15) geeignet sind, mit dem System mittels der Kommunikationsschnittstelle (5) in Verbindung zu stehen,
d. Mittel (20) zum Vergleichen des durch das Modell vorhergesagten Zustands des Systems und des Zustands des realen Systems, wobei diese Vergleichsmittel (20) geeignet sind, mit dem System mittels der Kommunikationsschnittstelle (55) in Verbindung zu stehen,
e. zweite Mittel (25) zur Speicherung einer Liste unstimmiger charakteristischer Variablen, die aus dem Vergleich durch die Vergleichsmittel (20) hervorgegangen ist,
f. Mittel (30) zur Auswahl der auffälligen einflussreichen Ausgangsvariablen, die den unstimmigen Wert von wenigstens einer unstimmigen charakteristischen Variablen erzeugt haben können, aus dem Modell,
g. Mittel (40) zum Filtern der auffälligen einflussreichen Ausgangsvariablen, um die begrenzten, auffälligen einflussreichen Variablen zu erhalten,
h. dritte und vierte Mittel zum Speichern (35) und (45) der auffälligen einflussreichen Ausgangsvariablen bzw. der begrenzten, auffälligen einflussreichen Variablen.

14. Verwendung des Verfahrens nach einem der Ansprüche 1 bis 12 für die Analyse eines durch Steuerungsautomaten gesteuerten Industriesystems.

## Claims

1. Analysis method for providing a diagnostic on the functioning of a real system, the method being based on the use of a model of the said system, where the said model includes at least two variables associated with sensors of the real system and divided into one or more groups and stored in first means (10) for storing data, each of the said groups being defined by, and including, one or more variables called characteristic variables and grouping together all the other variables, called influent variables, having a direct or indirect influence on the value of at least one of the said characteristic variables of the said group, **characterised in that** it includes:
- a step (1) for initialisation of the model into a state corresponding to a given state of the real system via first processing means (15) which communicate with the real system by a communication interface (55),
- a step (2) for creating a list, called the discordant variables list, of characteristic variables whose value predicted by the model is not verified in said real system, and for storing said discordant variables list in second means (25) for storing data, via means (20) for comparing which communicate with the real system by the communication interface (55), this step (2) for creating the discordant variables list comprising:
i. a step (21) for prediction by the model of the state of the real system from a given command,
ii. a step (22) for comparison of the predicted state with the real state of the system after performing said given command,
and for each characteristic variable of the said discordant variables list, a process that (3) includes:
- a step (31) for creating a list, called initial suspect variables list, of influent variables that may have generated the discordant value of the said discordant variable, and storing said initial suspect variables list in third means (35) for storing data, via means (30) for selection,
- a step (32) for creating a list, called restricted list of suspect variables, by filtration of the said initial list of suspect variables, and storing said restricted list of suspect variables in fourth means (45) for storing data, via means (40) for filtration.

2. A method according to claim 1, **characterised in that** it includes:
- when the said comparison step (22) indicates a difference between the respective values of one or more characteristic variables in the predicted state and the respective values of these so-called characteristic variables in the real state of the system, a step (231) for insertion of the discordant variables into the said discordant variables list,
- when the said comparison step (22) indicates no difference between the value of a characteristic variable in the predicted state and the value of this defining variable in the real state of the system, a step (232) for updating the model in order to validate its state.

3. A method according to any of claims 1 and 2, **characterised in that** the said step (31) for creating an initial list of suspect variables consists of selecting all the influent variables forming part of the group to which the said discordant variable concerned at step (3) belong.

4. A method according to any of claims 1 to 3, **characterised in that** the said step (32) for creating a restricted list of suspect variables consists of eliminating the said suspect variables from the said initial list of suspect variables which:
- either do not generate any discordant value in the model, for each of the variables belonging to the said discordant variables list,
- or generate a discordant value in the model, for at least one characteristic variable not belonging to the said discordant variables list.

5. A method according to any of claims 1 to 4, **characterised in that** the said step (32) for creating a restricted list of suspect variables includes:
- a first filtration step (321) by elimination of the said suspect variables that do not generate the discordant value of the said discordant variable concerned at step (3),
- a second filtration step (322) by elimination of the said suspect variables which:
i. either generate a discordant value for one or more characteristic variables other than the said discordant variable concerned at step (3) and which do not belong to the said discordant variables list,
ii. or generate no discordant value for one or more characteristic variables other than the said discordant variable concerned at step (3) and which belong to the said discordant variables list.

6. A method according to any of claims 1 to 5, **characterised in that** the step (31) for creating an initial list of suspect variables includes a pre-diagnosis step to select a subset of the suspect variables from among the influent variables forming part of the group to which the said discordant variable concerned at step (3) belong.

7. A method according to any of claims 1 to 8, **characterised in that**, prior to step (31) for creating an initial list of suspect variables, the said discordant variables list is sorted.

8. A method according to claim 7, **characterised in that** the sort is based on a partial order relation associated with a dependency graph which sequences the said groups of the model, with the characteristic discordant variable belonging to the group of highest rank being placed in the first position, and so on.

9. A method according to any of claims 1 to 8, **characterised in that**, after processing step (3) has been repeated for each of the variables of the said discordant variables list, it includes a step of localised investigations.

10. A method according to any of claims 1 to 9, **characterised in that**, after processing step (3) has been repeated for each of the variables of the said discordant variables list, and when a new characteristic discordant variable has appeared, it includes an additional filtration step in order to eliminate all the influent suspect variables resulting from the repetition of step (3) which do not generate the discordant value of the said new characteristic discordant variable.

11. A method according to any of claims 1 to 10, **characterised in that** where there is an influent variable over which no other variable of the same group has influence, called a primary influent variable, a simplified model is constructed from the initial one by taking account in each group only of the influent primary variables and the characteristic variables.

12. A method according to claim 11, **characterised in that** the said simplified model is used in place of the initial model in the said step (2) for creation of the said discordance lists.

13. An analysis device for providing a diagnostic on the functioning of a real system, said device being based on the use of a model of the said real system, where the said model includes at least two variables associated with sensors of the real system and divided into one or more groups, each of the said groups being defined by, and including, one or more variables called characteristic variables, and grouping together all the other variables, called influent variables, having a direct or indirect influence on the value of at least one of the said characteristic variables of the said group, and implementing the method according to any of claims 1 to 12, **characterised in that** it includes:
a. a communication interface (55) able to allow communication between the analysis device and the real system,
b. first means (10) for storage of the data defining the model
c. processing means (15) to implement the model, said processing means (15) being able to communicate with the system via said communication interface (55),
d. means (20) for comparing the state of the system predicted by the model and the state of the real system, said means (20) for comparing being able to communicate with the system via said communication interface (55),
e. second means (25) for the storage of a list of characteristic discordant variables resulting from the comparison by the said comparison means (20),
f. means (30) for selection, in the model, of the initial influent suspect variables that may have generated the discordant value of at least one characteristic discordant variable,
g. means (40) for filtration of the said initial influent suspect variables in order to obtain the restricted influent suspect variables,
h. third and fourth storage means (35, 45) for respectively the said initial influent suspect variables and for the said restricted influent suspect variables.

14. Use of the method according to any of claims 1 to 12, for the analysis of an industrial system controlled by automatic control systems
